# EUROPÄISCHE PATENTSCHRIFT

(11) **EP 4 294 646 B1**
(45) Veröffentlichungstag und Bekanntmachung des Hinweises auf die Patenterteilung: **23.10.2024**
(21) Anmeldenummer: 22700704.4
(22) Anmeldetag: 12.01.2022
(51) Int. Cl.: B42D 25/455, B42D 25/46, B42D 25/465, B42D 25/47

(54) **SICHERHEITSELEMENT UND VERFAHREN ZU SEINER HERSTELLUNG**
SECURITY ELEMENT AND METHOD FOR PRODUCING SAME
ÉLÉMENT DE SÉCURITÉ ET SON PROCÉDÉ DE FABRICATION

(30) Priorität: 19.02.2021 DE 102021000890
(43) Veröffentlichungstag der Anmeldung: 27.12.2023
(73) Patentinhaber: Giesecke+Devrient Currency Technology GmbH, 81677 München (DE)
(72) Erfinder: HOFFMÜLLER, Winfried, 83646 Bad Tölz (DE); HETTENKOFER, Christine, 85653 Aying (DE); BACHER, Erwin, 83734 Hausham (DE); RENNER, Patrick, 83677 Reichersbeuern (DE)
(74) Vertreter: Giesecke+Devrient IP
(86) Internationale Anmeldenummer: PCT/EP2022/025012
(87) Internationale Veröffentlichungsnummer: WO 2022/174975

(56) Entgegenhaltungen:
- EP-A1- 0 514 147
- EP-B1- 1 776 240
- WO-A1-2015/040113

## Beschreibung

Die Erfindung betrifft ein Sicherheitselement für Wertdokumente oder dergleichen, das mit einem bei Raumtemperatur nicht klebrigen, zur Aufbringung des Sicherheitselements auf ein Wertdokumentsubstrat geeigneten Heißsiegelklebstoff beschichtet ist. Die Erfindung betrifft ferner ein Verfahren zur Herstellung eines solchen Sicherheitselements. Darüber hinaus betrifft die Erfindung ein Wertdokument mit einem solchen Sicherheitselement sowie ein Verfahren zur Herstellung des mit dem Sicherheitselement versehenen Wertdokuments.

Wertdokumente, insbesondere Banknoten, werden zur Absicherung oft mit Sicherheitselementen ausgestattet, die eine Überprüfung der Echtheit des Wertdokuments gestatten und die zugleich als Schutz vor unerlaubter Reproduktion dienen. Wertdokumente im Sinne der vorliegenden Erfindung sind insbesondere Banknoten, Aktien, Ausweise, Kreditkarten, Anleihen, Urkunden, Gutscheine, Schecks, hochwertige Eintrittskarten, aber auch andere fälschungsgefährdete Papiere, wie Pässe und sonstige Ausweisdokumente, sowie Produktsicherungselemente, wie Etiketten, Siegel, Verpackungen und dergleichen. Der Begriff "Wertdokument" schließt im Folgenden auch die noch nicht umlauffähige Vorstufe zu einem Wertdokument, insbesondere ein Sicherheitspapier, ein.

Es ist bekannt, Wertdokumente, beispielsweise Banknoten, mit einem Sicherheitselement in Form eines Sicherheitsfadens, eines Sicherheitsstreifens oder eines Patch bzw. Etiketts abzusichern.

Bei fast allen Sicherheits- und Banknotenpapieren wird heute als Sicherheitsfaden ein mit Heißsiegelklebstoff, insbesondere Heißsiegellack, beschichteter Faden auf der Papiermaschine in das Papier eingebracht. Der Heißsiegellack dient dabei der verbesserten Verankerung des Fadens im Papier. Heißsiegellacke werden bei der Banknotenherstellung außerdem zur Applikation von Hologrammen und Hologrammstreifen eingesetzt.

Beim Aufbringen von Sicherheitselementen mithilfe von Heißsiegellacken wird zumindest eines der zu verbindenden Substrate mit einer lösungsmittelbasierten Polymerlösung oder einer wässrigen Lösung oder Dispersion beschichtet. Nach der physikalischen Trocknung mittels Erwärmen liegt eine bei Raumtemperatur nicht klebrige Oberfläche vor. Bei Temperatureinwirkung schmilzt die siegelfähige Masse auf und wirkt als Klebstoff.

Aus der EP 1 776 240 B1 ist die Verwendung eines bei Raumtemperatur nicht klebrigen Heißsiegelklebstoffs für das Aufbringen eines Sicherheitselements auf ein Wertdokumentsubstrat durch einen Heißsiegelvorgang bei erhöhtem Druck und erhöhter Temperatur bekannt. Der Heißsiegelklebstoff enthält darüber hinaus eine durch energiereiche Strahlung vernetzbare Komponente. Die Anwesenheit der durch energiereiche Strahlung vernetzbaren Komponente innerhalb des Heißsiegelklebstoffs ermöglicht es, beim Aufbringen des Sicherheitselements auf das Wertdokumentsubstrat eine Vernetzung durch Bestrahlung durchzuführen. Dabei entsteht ein hochschmelzendes bis unschmelzbares System, wodurch eine hohe Stabilität und insbesondere eine ausgeprägte Heißwasserbeständigkeit erzielt werden. Die Heißwasserbeständigkeit ist z.B. mittels einer Waschmaschine feststellbar. Ein geeigneter Heißwassertest wird insbesondere bei den Bedingungen 100°C/30min oder 60°C/1,5 h vorgenommen.

Der aus der EP 1 776 240 B1 bekannte Heißsiegelklebstoff kann in Form einer Lösung, einer Emulsion oder in Form einer Dispersion auf das zu applizierende Sicherheitselement aufgetragen werden. Die in dieser Form aufgetragene strahlenvernetzbare Beschichtung schmilzt bei niedrigen Temperaturen und dringt in das Wertdokumentsubstrat ein, was zu einer leichten Verarbeitbarkeit führt. Die auf diese Weise beschichteten, noch nicht vernetzten Sicherheitselemente sind im Idealfall lagerfähig ohne Schmelzpunktänderung. So sind beispielsweise mit der bei Raumtemperatur nicht klebrigen Beschichtung ausgestattete Folien aufwickelbar und ohne Änderung des Schmelzpunkts über längere Zeit lagerfähig.

Beim Auftragen des aus der EP 1 776 240 B1 bekannten Heißsiegelklebstoff in Form einer Lösung, einer Emulsion oder in Form einer Dispersion auf das zu applizierende Sicherheitselement ist eine physikalische Trocknung erforderlich, die z.B. durch eine leichte Temperaturerhöhung auf 80°C erfolgt. Auf diese Weise wird eventuell vorhandenes Lösungsmittel und/oder Wasser aus der strahlungshärtbaren Dispersion, Lösung oder Emulsion ausgetrieben. Die physikalische Trocknung erfordert unter Umständen eine so starke Beaufschlagung mit Wärme, dass sich im Falle hochreaktiver Klebstoffsysteme ein unbeabsichtigtes Aushärten ereignet. Im Falle eines reaktionsträgen Klebstoffsystems würde eine zu kurze thermische Einwirkzeit während des Aufbringens des mit Heißsiegelklebstoff versehenen Sicherheitselements auf ein Wertdokumentsubstrat zu einem ungenügenden Aushärten und somit zu einer mangelhaften Adhäsion des Sicherheitselement an das Wertdokumentsubstrat führen.

Der vorliegenden Erfindung liegt die Aufgabe zugrunde, ein Sicherheitselement bereitzustellen, durch das die Nachteile des Standes der Technik überwunden werden.

Diese Aufgabe wird durch die im Hauptanspruch definierte Merkmalskombination gelöst. Weiterbildungen der Erfindung sind Gegenstand der Unteransprüche.

Ausführliche Beschreibung der Erfindung Anstelle der Formulierung "ein bei Raumtemperatur nicht klebriger Heißsiegelklebstoff" wird hierin auch die Formulierung "ein bei Raumtemperatur tackfreier Heißsiegelklebstoff" oder die Formulierung "ein bei Raumtemperatur im Wesentlichen tackfreier Heißsiegelklebstoff" verwendet. Mit dem Begriff "Raumtemperatur" wird hierin eine Temperatur von 23°C verstanden.

Anstelle des Begriffs "Heißsiegelklebstoff" wird hierin auch der Begriff "Heißsiegellack" verwendet.

Das erfindungsgemäße Sicherheitselement ist mit einem bei Raumtemperatur nicht klebrigen Heißsiegelklebstoff ausgestattet. Der Heißsiegelklebstoff weist darüber hinaus eine strahlenvernetzbare Komponente und einen Reaktivverdünner auf. Die Erfindung baut auf dem aus der EP 1 776 240 B1 bekannten Heißsiegelklebstoff auf. Der Erfindung liegt die Erkenntnis zugrunde, dass eine Senkung der Siegeltemperatur und zugleich verbesserte Benetzungseigenschaften der Schmelze erzielt werden können, wenn der Heißsiegelklebstoffzusammensetzung ein Reaktivverdünner beigemengt wird. Insbesondere im Falle wässriger Formulierungen sind besonders vorteilhafte Effekte erreichbar, wenn zusätzlich zur eigentlichen, dispergierten Urethanacrylatkomponente Reaktivverdünner vorhanden ist. Ohne sich darauf festzulegen ist anzunehmen, dass die Reaktivverdünner im ersten Schritt in die Dispersionspartikel einwandern und weniger in der wässrigen Phase zu finden sind. Nach der physikalischen Trocknung fungieren sie als Koaleszenzmittel und fördern so die Verfilmung. Je nach Formulierung kann eine vollständige Tackfreiheit, d.h. nicht klebriges Verhalten, gewährleistet sein. Ein Beispiel für eine Dispersion, die bereits in gelieferter Form Reaktivverdünner enthält, ist Alberdingk Lux 481. Hierbei sind weniger als 10% DPHA und 3% bis 5% TMP(EO)ₓTA enthalten. Die Abkürzung "TMP(EO)TA" steht für Trimethylolpropan(ethoxy)triacrylat, die Abkürzung DPHA für Dipentaerythritolhexaacrylat. Auch alleine mit einem Gehalt von weniger als 15% TMP(EO)xTA sind besonders gut heißsiegelfähige Dispersionen erzielbar. In der Formel TMP(EO)ₓTA ist x vorzugsweise in einem Bereich von 1 bis 9, weiter bevorzugt in einem Bereich von 3 bis 9, gewählt, wobei x insbesondere bevorzugt 3 ist.

Die erfindungsgemäßen Heißsiegellackformulierungen sind vorzugsweise wässrige Dispersionen und insbesondere solche, die entweder von vornherein oder nach Zugabe 5% bis 25%, bevorzugt 9% bis 16% einer niedermolekularen Verbindung (M<1000g/mol) enthalten.

Die Vorteile der Reaktivverdünner sind die allgemeine Senkung der Siegeltemperatur und die verbesserten Benetzungseigenschaften der Schmelze. Ein Nachteil ist die Senkung der Blockfestigkeit. Der Einsatz multifunktioneller Reaktivverdünner führt nach der Vernetzung zu einem hochmolekularen System, das ggf. nicht mehr schmelzbar ist. Eine Eigenschaft, die zwar nicht schadet, aber auch nicht angestrebt werden muss, solange der Schmelzpunkt nur so hoch liegt, dass ein Schmelzen nicht mehr zur zerstörungsfreien Ablösung eines Sicherheitselements eingesetzt werden kann.

Es ist zweckmäßig, der erfindungsgemäßen Heißsiegellackformulierung Triphenylphosphat, Pentaerythritoltetrabenzoat, Cyclohexandimethanoldibenzoat und/oder Sucrosebenzoat als eine lösliche Komponente beizumengen. Hierbei handelt sich um eine Art Weichmacher mit einem bevorzugten Schmelzpunkt in einem Bereich von 50°C bis 120°C. Es wird bevorzugt, dass die Zugabe des Weichmachers in einem Gewichtsanteil von 1% bis 30%, bevorzugt 2% bis 10% (bezogen auf den Festkörper) erfolgt. Diese bei Raumtemperatur festen Stoffe sind im Hinblick auf das Verblockungsverhalten weniger kritisch als flüssige Stoffe. Durch ihre Löslichkeit in Reaktivverdünnern können sie auch in die Gesamtformulierung eingebracht werden.

Geht man alternativ nicht von einer wässrigen Dispersion aus, sondern von einem UV-System, wie es z.B. als Dual-Cure-System erhältlich ist, insbesondere eine lösemittelbasierte Formulierung, wobei vorzugsweise Butylacetat als Lösungsmittel verwendbar ist, können die vorstehend genannten Weichmacher auch direkt gelöst werden, wobei sie nach physikalischer Trocknung wieder fest vorliegen und nur wenig Einfluss auf die Verblockung haben.

Die erfindungsgemäße Heißsiegellackformulierung weist mindestens ein Lösungsmittel auf, das in einem bevorzugten Gewichtsanteil in einem Bereich von 30% bis 90%, insbesondere bevorzugt in einem Bereich von 40% bis 75%, vorliegt, wobei das Lösungsmittel vorzugsweise von der Gruppe bestehend aus Butylacetat, Propylacetat, Ethylacetat und einem Gemisch zweier oder mehrerer der vorstehend genannten Stoffe gewählt ist.

Es wird bevorzugt, zusätzlich ein Präpolymer beizumengen, das bei Raumtemperatur nach physikalischer Trocknung tackfrei ist, im Durchschnitt mindestens zwei reaktive Gruppen enthält und ein Molekulargewicht von mindestens 600g/mol besitzt. Das Präpolymer ist in der Heißsiegellackformulierung vorzugsweise in einem Gewichtsanteil in einem Bereich von 8% bis 65% enthalten.

Zur Steigerung der Reaktivität kann der Heißsiegellackformulierung ein A-minsynergist hinzugefügt werden.

Im Falle einer Elektronenstrahlhärtung ist kein Photoinitiator erforderlich. Insbesondere im Falle einer wässrigen Formulierung sind die Photoinitiatoren TPO-L, Omnirad 500 und Omnirad 819 DW vorteilhaft. Der bevorzugte Gewichtsanteil beträgt 1% bis 8% bezogen auf den jeweiligen Festkörper. Zusätzlich kann besonders im Falle des Einsatzes von Photoinitiatoren aus der BAPO-Reihe ein Sensibilisator, beispielsweise aus der ITX-Familie für höhere Reaktivität vorteilhaft sein. Die Abkürzung "BAPO" steht für Phe-nylbis(2,4,6-trimethylbenzoyl)-phosphinoxid, die Abkürzung "ITX" steht für Isopropylthioxanthon.

In einigen Fällen haftet der Heißsiegellack nicht direkt auf dem zu verklebenden Sicherheitselement. In diesen Fällen ist es zweckmäßig, das Sicherheitselement zu modifizieren, z.B. durch den Einsatz einer druckvorbehandelten Folie, oder mit bekannten Vorbehandlungsmethoden, z.B. Plasma-oder Coronavorbehandlung, vorzubehandeln oder mit einem Primer zu versehen.

Bei der Auswahl geeigneter Primer hat sich herausgestellt, dass das Potential der UV-Vernetzung des Heißsiegellacks besonders mit reaktiven Primersystemen voll genutzt werden kann. Dies sind z.B. 2K-PU-Systeme, die insbesondere mehrschichtig aufgebracht werden. Besonders vorteilhaft ist es dabei, wenn zumindest eine Schicht ein aliphatisches Isocyanat enthält.

Die bezüglich der wässrigen Systeme erwähnten Reaktivverdünner und die bezüglich der Lösemittelsysteme besonders erwähnten löslichen, niedermolekularen Bestandteile bzw. Weichmacher sind migrationsfähig. Daraus ergibt sich, dass sie sich bei entsprechender Lagerung im gesamten Aufbau verteilen können und die Haftung zum Untergrund verloren geht und sich die Siegelfähigkeit verschlechtert.

Im Bereich der PVC-Folien ist der Einsatz von Sperrschichten gegen die Migration von Weichmachern üblich. In diesem Bereich werden lösemittelbasierte Beschichtungen relativ hochmolekularer Acrylate eingesetzt. Typische Substanzen hierzu sind unter den Markennamen Degalan und Elvacite erhältlich.

Gemäß einer besonderen Variante kann ein strahlenvernetzbarer Heißsiegellack in mehreren Schichten aufgebracht werden, wobei die erste Schicht vorab vernetzt werden kann. Falls auf einem Primer die erste Schicht des Heißsiegellacks nach der physikalischen Trocknung strahlenvernetzt wird, kann die erste Schicht selbst auch als Sperrschicht gegen migrationsfähige Bestandteile der folgenden Heißsiegellackschichten dienen. Außerdem verhindert sie das Einsinken eventuell eingesetzter Abstandhalter, wie etwa Wachse, in den Heißsiegellack bzw. Primeraufbau.

Die Vernetzung des Heißsiegellacks kann direkt nach der Siegelung, bevorzugt noch unter Ausnutzung der erhöhten Temperatur des Siegelvorgangs stattfinden, da zu diesem Zeitpunkt die Rohstoffe noch keine Gelegenheit zu Kristallisationsvorgängen hatten und damit die Beweglichkeit der reaktiven Gruppen besser und damit die Vernetzung besser ist. Dies ist besonders vorteilhaft im Falle der Vernetzung mit Mitteldruckquecksilberstrahlern, die selbst viel Wärme abgeben, und im Falle der Vernetzung mit LED-Strahlern mit geringer Wärmeabgabe. Wenn die Erwärmung durch die Strahler nicht ausreicht, ist eine Heizwalze zweckmäßig, um vor und während der Vernetzung die Temperatur kontrollieren zu können.

Sollte in der Applikationsmaschine keine UV-Vernetzung möglich sein, ist eine UV-Vernetzung auch in einem separaten Arbeitsgang möglich. Bevorzugt ist ein Arbeitsgang, bei dem ohnehin UV-Vernetzung erfolgen soll. Ein typisches Beispiel ist die Vernetzung an einer Siebdruckmaschine, die bei entsprechender Ausstattung ein Substrat von beiden Seiten bestrahlen kann. Wenn es sich bei dem zu verklebenden Sicherheitselement um einen Patch handelt, ist meist nur ein Teil des Sicherheitselements mit einer opaken Schicht versehen, die die Vernetzung erschwert. Der Randbereich ist meist transparent. Daraus ergibt sich, dass der Randbereich sehr leicht durch Belichtung von oben vernetzt werden kann, während die Bereiche unter der opaken Beschichtung bevorzugt von unten, durch das Substrat hindurch belichtet werden. Die opake Beschichtung ist oft eine Metallisierung, die das entsprechende Licht reflektiert und damit eine bessere Ausnutzung des durch das Substrat hindurchgestrahlten Lichts ermöglicht.

Heißsiegellacke im unvernetzten Zustand haben die Eigenschaft, bei Temperatureinwirkung weich zu werden. Im Falle des Stichtiefdrucks herrschen erhöhte Temperaturen und ein hoher Druck. Beim Einsatz einer hohen Schichtdicke des Heißsiegellacks kann damit auch eine starke Verprägung erreicht werden. Wenn danach die Vernetzung erfolgt, kann die Verprägung dauerhaft fixiert werden. Dies ist besonders vorteilhaft bei Substraten, die sich im Stichtiefdruck plastisch verformen lassen.

Strahlenvernetzbare Heißsiegellacke haben neben dem Vorteil der hohen Beständigkeit den Nachteil, dass die sogenannte Rinnenbildung, d.h. eine schlechte Planlage, nach der Vernetzung besonders ausgeprägt ist, da es sich um ein beim Härten schrumpfendes System und um ein vernetztes, nicht mehr fließfähiges System nach dem Härten handelt und ein Abbau von Spannungen später kaum noch möglich ist.

Dies kann einerseits durch den Zusatz der oben beschriebenen Weichmacher, die eine begrenzte Verformbarkeit auch nach der Vernetzung zulassen, erreicht werden, andererseits durch den Zusatz von sogenannten Kettenüberträgern. Dies können z.B. Thiole sein. Durch Kettenüberträger wird im Rahmen einer Vernetzungsreaktion der Gelpunkt zu einem späteren Zeitpunkt hin verschoben, wodurch weniger Spannungen aufgebaut werden.

Die oberste Schicht des Sicherheitselements, die Kontakt zum Heißsiegellack hat, kann z.B. eine übliche unvorbehandelte Polyesterfolie sein, es kann sich aber auch um eine coextrudierte Folie handeln, die eine Schicht mit einer geringeren Haftung zum Heißsiegellack aufweist. Da z.B. im Falle eines Patch auch eine Doppelfolie als Träger vorliegen kann, kann auch eine beliebige Folie mit geringerer Haftung zum Klebstoff aufkaschiert sein. Auch eine silikonisierte Polyesterfolie ist möglich. Eine normale Polyesterfolie kann auch zusätzlich mit einer weniger zur Verblockung neigenden Schicht beschichtet sein. Diese Schicht kann auch größere Abstandhalter aufweisen.

Der im Falle der UV-Härtung eingesetzte Photoinitiator kann als kleines definiertes Molekül einen festen Schmelzpunkt aufweisen. Wenn dieser im passenden Temperaturbereich liegt, kann er das Schmelzverhalten fördern.

Während bei wässrigen Dispersionen für die Außenanwendung der Einsatz von UV-Absorbern bzw. Stabilisatoren üblich ist, ist lediglich bei Hotmelts der Einsatz von Stabilisatoren üblich, um eine längere Temperaturstabilität in der Schmelze im Extruder bzw. Auftragsgerät zu ermöglichen.

Bei Bedarf können z.B. Benzotriazol-basierte UV-Absorber wie etwa Tinuvin 9945 DW und/oder Triazine wie etwa Tinuvin 477 DW als Additive beigemengt werden. Die Zugabe sollte mengenmäßig so erfolgen, dass die Blockfestigkeit nicht beeinträchtigt wird. Damit die Absorber ihre Wirkung entfalten können, sollten die Absorber mit dem Film der wässrigen Dispersion kompatibel sein. Gleichzeitig sind die Absorber idealerweise bei Raumtemperatur flüssig oder niedrigschmelzend. Daher ist zu erwarten, dass durch den Zusatz der Absorber neben der Bewitterungsstabilität auch die Siegelfähigkeit verbessert werden kann. Im langwelligen UV-Bereich, d.h. an der Grenze zum sichtbaren Bereich, typischerweise LED 395 nm, sollte die Vernetzung nicht beeinträchtigt werden.

Im Falle eines auf ein Wertdokumentsubstrat, insbesondere ein Papiersubstrat, aufzubringenden Sicherheitsstreifen, insbesondere einem von einer temporären Trägerfolie abzulösenden Transferelement, kann die Belichtung nach dem Aufbringen des Sicherheitsstreifens von der Seite des Sicherheitsstreifens her durch die Trägerfolie hindurch erfolgen, oder nach dem Abziehen der Trägerfolie erfolgen, oder von der Seite des Wertdokumentsubstrats her erfolgen, je nach Transparenz der verschiedenen Elemente.

Im Falle eines auf ein Wertdokumentsubstrat aufzubringenden Sicherheitsstreifens mit permanenter Trägerfolie kann die Belichtung nach dem Aufbringen des Sicherheitsstreifens von der Seite des Sicherheitsstreifens her durch die Trägerfolie hindurch erfolgen, oder von der Seite des Wertdokumentsubstrats her erfolgen, je nach Transparenz der verschiedenen Elemente.

Im Falle eines auf ein Wertdokumentsubstrat aufzubringenden Patch bzw. Etikett ergeben sich Einschränkungen. Um Trägerfolie zu sparen und kostengünstigere Patch-Elemente produzieren zu können, befinden sich die Patch-Elemente auf der Trägerfolie oft enger angeordnet als auf dem späteren Wertdokumentsubstrat. Daher kann die Belichtung entweder erst nach dem Abziehen der Trägerfolie erfolgen oder mithilfe einer Maske, die z.B. rotieren kann, damit jeweils nur der bereits applizierte Patch belichtet wird und nicht die noch auf der Trägerfolie befindlichen Patch-Elemente, oder im Falle eines LED-Strahlers der Strahler so angesteuert wird, dass er nur im richtigen Moment zur Patch-Belichtung strahlt und dann wieder praktisch ausgeschaltet wird. Dieser Aspekt der Patch-Belichtung durch schnelles Ein-und Ausschalten des Strahlers ist vorteilhaft, da ein wesentliches Problem von LED-Strahlern die Temperatur ist. Bei hoher Temperatur verlieren sie an Leistung und Lebensdauer. Wenn die zu bestrahlende Patch-Fläche nur ca. 1/3 der Gesamtfläche ausmacht, verringert sich damit die Wärmeentwicklung um 2/3, wodurch der Strahler unter Umständen sogar mit höherer Leistung als seiner Leistung im Dauerbetrieb betrieben werden kann und man zumindest Kühlleistung spart.

Gegebenenfalls ist es zweckmäßig, unterhalb des auf ein Wertdokumentsubstrat aufzubringenden Sicherheitselements einen Primer zu drucken. Der Primer kann auf ähnlicher Basis wie der einzusetzende Heißsiegellack aufgebaut sein. Beim Aufdrucken eines Primers, der zunächst eine physikalische Trocknung erfährt, erzielt man meist eine bessere Haftung als beim gewöhnlichen Heißsiegeln. Wenn der Primer und der Heißsiegellack eine ähnliche Basis haben, verbinden sie sich beim Heißsiegeln optimal und können bei anschließender Bestrahlung untrennbar zusammenpolymerisieren. Es besteht unter Umständen die Schwierigkeit, dass der Primer dann aber beim Siegelvorgang ebenfalls aufschmilzt und zu einer Verschmutzung von Kalander oder Gegenwalze führt, weswegen es zweckmäßig ist, in einem Versuch nur einen schmäleren Primeraufdruck als das zu siegelnde Sicherheitselement zu realisieren.

Der erfindungsgemäße Heißsiegellack führt zu einer vorteilhaften Absenkung der erforderlichen Siegeltemperatur. Falls ein System vorliegt, das z.B. einen zusätzlichen Primer oder eine zusätzliche Farbannahmeschicht aufweist, aber nicht auf einen niedrigen Schmelzpunkt hin optimiert ist, kann es auch größerflächig gedruckt werden und legt sich trotzdem beim Siegelvorgang nicht auf Walzen ab. Das Prozessfenster kann durch eine Antihaftbeschichtung der entsprechenden Walze erweitert werden.

Folglich ist der Einsatz von Systemen unterschiedlicher Siegeleigenschaften als Vorbeschichtung zumindest in einem Teilbereich des Substrats ebenso denkbar wie der Einsatz als Heißsiegellack.

Die erfindungsgemäße Beschichtung kann in Form einer Lösung, einer Emulsion oder in Form einer Dispersion aufgetragen werden. Die in dieser Form aufgetragene strahlenvernetzbare Beschichtung schmilzt bei niedrigen Temperaturen und dringt in das Substrat ein, was zu einer leichten Verarbeitbarkeit führt. Das erfindungsgemäße Sicherheitselement ist folglich mit einem niedrigschmelzenden, bei Raumtemperatur jedoch im Wesentlichen tackfreien System ausgestattet. Die Anwesenheit einer strahlenvernetzbaren Komponente in der Beschichtung erlaubt es, nach der Applikation der Beschichtung eine Vernetzung durch Bestrahlung durchzuführen. Dabei entsteht ein hochschmelzendes bis unschmelzbares System, wodurch eine hohe Stabilität und insbesondere eine genügende Heißwasserbeständigkeit z.B. beim Waschmaschinentest erreicht wird. Ein geeigneter Heißwassertest wird insbesondere bei 100°C/30min oder 60°C/1,5 h vorgenommen.

Bei der Vernetzung verbessert sich die Haftung auf dem Substrat, z.B. einer druckvorbehandelten Folie, und die innere Festigkeit der Beschichtung steigt an. Die unmittelbar vor, während und unmittelbar nach der Härtung herrschende Temperatur der Beschichtung ist ein wichtiger, den erzielbaren Vernetzungsgrad bestimmender Parameter. Bei höherer Temperatur kann ein höherer Vernetzungsgrad erzielt werden, da die Beweglichkeit der reaktiven Gruppen höher ist.

Die üblichen UV-Lacke sind vor der Vernetzung flüssig und erzeugen eine erhebliche Reaktionswärme, da viele reaktive Gruppen auf engem Raum vorliegen. Die strahlen- und insbesondere UV-härtbaren Beschichtungen gemäß der vorliegenden Erfindung hingegen bestehen aus Molekülen mit relativ hohem Molekulargewicht und sind bei Raumtemperatur fest. Durch die geringere Anzahl reaktiver Gruppen pro Volumen-/Masseneinheit ist die Reaktionswärme geringer. Dadurch spielt der äußere Wärmeeintrag bei der Vernetzung eine größere Rolle. Durch die Temperatur bei der Härtung können daher die mechanischen Eigenschaften der Beschichtung gesteuert werden.

Die auf diese Weise beschichteten, noch nicht vernetzten Sicherheitselemente sind lagerfähig ohne Schmelzpunktänderung. So sind beispielsweise mit der bei Raumtemperatur im Wesentlichen tackfreien Beschichtung ausgestattete Folien aufwickelbar und ohne Änderung des Schmelzpunkts über längere Zeit lagerfähig.

Gemäß einer vorteilhaften Weiterbildung der Erfindung liegt die bei Raumtemperatur im Wesentlichen tackfreie Beschichtung zumindest physikalisch getrocknet vor. Durch eine leichte Temperaturerhöhung auf beispielsweise 80°C werden eventuell vorhandenes Lösungsmittel und/oder Wasser aus der strahlungshärtbaren Dispersion, Lösung oder Emulsion ausgetrieben. Diese physikalische Trocknung bewirkt, dass die Beschichtung bei Raumtemperatur im Wesentlichen tackfrei vorliegt.

Im Rahmen der vorliegenden Beschreibung bedeutet der Begriff "im Wesentlichen tackfrei" auch im Wesentlichen klebfrei im Sinne einer glatten, im Wesentlichen nicht klebrigen Oberfläche. Die Überprüfung kann dabei durch folgenden Test erfolgen: Beschichtete Folienstücke von etwa 100 cm² werden gestapelt und mit einem Gewicht von 10 kg belastet und 72 Stunden bei 40°C gelagert. Lassen sich die Folienstücke danach ohne Beschädigung der Beschichtungen mühelos voneinander trennen, ist die Beschichtung als im Wesentlichen tackfrei anzusehen.

Das Substrat des erfindungsgemäßen Sicherheitselements kann grundsätzlich in jeder beliebigen Form vorliegen. So kann das erfindungsgemäße Sicherheitselement z.B. aus Fasern bestehen, die mit der bei Raumtemperatur im Wesentlichen tackfreien Beschichtung ausgestattet sind. Gemäß einer vorteilhaften Variante der Erfindung handelt es sich aber um ein flächiges Substrat mit zwei gegenüberliegenden Hauptflächen. Bevorzugt ist nur eine Hauptfläche des Substrats mit einer bei Raumtemperatur im Wesentlichen tackfreien Beschichtung versehen.

Grundsätzlich reicht es aus, wenn eine Hauptfläche des Substrats teilweise mit der bei Raumtemperatur im Wesentlichen tackfreien Beschichtung ausgestattet ist. Für eine optimale Einbettung des Sicherheitselements in ein Sicherheitspapier oder in ein Wertdokument ist es aber zweckmäßig, wenn die Hauptfläche(n) des Substrats vollflächig mit der bei Raumtemperatur im Wesentlichen tackfreien Beschichtung versehen ist. Je nach der Größe des Sicherheitselements kann es jedoch auch ausreichen, dass nur ein Teilbereich des Substrats mit der bei Raumtemperatur im Wesentlichen tackfreien Beschichtung versehen ist.

Wird das Sicherheitselement vollständig in das Sicherheitspapier eingebettet, hat es sich als besonders zweckmäßig herausgestellt, wenn beide Hauptflächen des Substrats mit der bei Raumtemperatur im Wesentlichen tackfreien Beschichtung versehen sind. Diese Variante kommt insbesondere dann zum Einsatz, wenn das Sicherheitselement nach Art eines Fenstersicherheitsfadens in ein Sicherheitspapier oder Wertdokument eingebettet wird. Die Hauptflächen können dabei sowohl mit gleichartigen Beschichtungen als auch mit unterschiedlichen Beschichtungen versehen sein.

Gemäß einer weiteren bevorzugten Ausführungsform der vorliegenden Erfindung weist das Sicherheitselement eine Dicke von 1 µm bis 100 µm, bevorzugt eine Dicke von 2 µm bis 50 µm auf. Dabei handelt es sich um die bei der Ausstattung von Wertdokumenten und Sicherheitspapieren mit Sicherheitselementen leicht handhabbaren Dicken der Sicherheitselemente.

Bevorzugt ist das Substrat des erfindungsgemäßen Sicherheitselements mehrlagig und/oder flexibel ausgestaltet. Die mit der Mehrlagigkeit des Sicherheitselements verbundenen Vorteile werden nachfolgend noch näher beschrieben. Die Flexibilität des Sicherheitselements ist häufig erwünscht, da auch die mit dem Sicherheitselement ausgestatteten Wertdokumente, wie z.B. Banknoten oder Urkunden, in der Regel flexibel sind.

Die bei Raumtemperatur im Wesentlichen tackfreie Beschichtung wird bevorzugt als Lösung, Emulsion oder Dispersion auf das Substrat aufgetragen und anschließend physikalisch getrocknet. Besonders bevorzugt wird eine wässrige Dispersion verwendet.

Eine solche wässrige Dispersion kann direkt auf ein Substrat, auf eine entsprechend druckvorbehandelte oder geprimerte, d.h. mit Primer versehene Folie (z.B. Hostaphan RNK 2600, Mitsubishi Polyester Film) oder in den Fällen, in denen zwischen dem Substrat und der bei Raumtemperatur im Wesentlichen tackfreien Beschichtung weitere Schichten vorliegen, auf diesen aufgetragen werden. Die so erhaltene Folie kann aufgewickelt, transportiert und gelagert werden. Durch Druck und Temperatur (ca. 100°C bis 160°C) kann die Folie auf Papier, eine weitere Folie oder ein Polymer appliziert werden.

Gemäß einer weiteren bevorzugten Ausführungsform der vorliegenden Erfindung ist die Dispersion ausgewählt aus der Gruppe bestehend aus aliphatischen Polyurethandispersionen, aromatischen Polyurethandispersionen, Acrylaten, anionischen acrylatmodifizierten Polyurethandispersionen, Polyurethan-Polyetheracrylaten und deren Gemischen.

Besonders gut geeignet sind acrylierte Polyurethandispersionen. Als Beispiele solcher acrylierten Polyurethandispersionen sind DW7770, DW7773, DW7825, DW7772, DW7849 (UCB, Surface Specialties) und Actilane 340 Epoxynovolacacrylat in Butoxyethyiacetat (Akzo) zu nennen.

Weitere strahlenhärtbare Dispersionen sind beispielsweise NeoRad R-440 (NeoResins), NeoRad R-441 (NeoResins), NeoRad R-445 (NeoResins), Laromer LR 8949 (BASF), Laromer LR 8983 (BASF), Laromer LR 9005 (BASF), LUX 101 UV-Dispersion (Alberdingk), LUX 241 UV-Dispersion (Alberdingk), LUX 308 UV-Dispersion (Alberdingk), LUX 352 UV-Dispersion (Alberdingk), LUX 370 UV-Dispersion (Alberdingk), LUX 390 UV-Dispersion (Alberdingk), LUX 399 UV-Dispersion (Alberdingk), LUX 331 UV-Dispersion (Alberdingk), LUX 338 UV-Dispersion (Alberdingk), Halwedrol UV 95/92 W (Hüttenes-Albertus), Halwedrol UV 14/40 W (Hüttenes-Albertus), Halwedrol UV-TN 6711/40 W (Hüttenes-Albertus), Halwedrol UV 65/40 W (Hüttenes-Albertus), Halwedrol UV-TN 7561-3/40 W (Hüttenes-Albertus), Halwedrol UV-TN 7157/40 W (Hüttenes-Albertus) und Bayhydrol UV VP LS 2280 (Bayer).

Unter den genannten Dispersionen befinden sich anionische und nicht ionische Dispersionen. Bei den meisten dieser Dispersionen handelt es sich um aliphatische Polyurethandispersionen (z.B. aliphatische Polyesterpolyurethane), daneben aber auch um aromatische Polyurethandispersionen und Copolymere (z.B. Dispersionen auf Basis von aliphatischen Polyurethan-und Acrylsäureester-Copolymeren), um Acrylate (Acrylsäureester-Copolymere) sowie anionische acrylatmodifizierte UV-härtende Polyurethandispersionen oder auch Polyurethan-Polyetheracrylate.

Bevorzugt liegt der Festkörperanteil der Dispersion zwischen 30 Gew.-% und 60 Gew.-%, vorzugsweise zwischen 35 Gew.-% und 50 Gew.-%. Durch Verdünnen kann der Festkörpergehalt aber nach Bedarf eingestellt werden.

Handelsübliche Dispersionen weisen einen Festkörpergehalt zwischen 38 Gew.-% und 51 Gew.-% auf. Aufgrund der einfachen Verfügbarkeit werden solche Dispersionen im Rahmen der vorliegenden Erfindung bevorzugt.

Die in der Beschichtung enthaltene strahlenvernetzbare Komponente kann bevorzugt durch ultraviolette Strahlung oder durch Elektronenstrahlung vernetzt werden. Vom spektralen Bereich her sind eisendotierte Strahler besonders gut geeignet. Alternativ können Strahler mit undotiertem Quecksilber oder Strahler mit Gallium-Dotierung verwendet werden. Hg-Strahler weisen bei Härtung durch zu applizierende Elemente hindurch allerdings einen etwas ungünstigeren Spektralbereich auf, während Ga-Strahler eine schlechtere Oberflächenhärtung bewirken.

Gemäß einer bevorzugten Ausführungsform enthält die bei Raumtemperatur im Wesentlichen tackfreie Beschichtung einen Photoinitiator. Die Vernetzung kann mithilfe eines Photoinitiators auf besonders einfache Weise gestartet und kontrolliert werden. Bevorzugte Beispiele solcher Photoinitiatoren sind Darocur 4265 (Ciba), Darocur 1173 (Ciba), Irgacure 500 (Ciba), Irgacure 184 (Ciba), Esacure KIP 100 F (Lamberti) und Irgacure 2959 (Ciba).

Besonders bevorzugt handelt es sich bei dem Photoinitiator um einen wasserlöslichen Photoinitiator, einen in Wasser dispergierbaren Photoinitiator oder um einen mittels wasserkompatiblen Lösungsmitteln in Wasser löslichen Photoinitiator. Als Beispiel für einen wasserlöslichen Initiator sei Irgacure 2959 (Ciba) genannt. Ein in Wasser dispergierbarer (oder vordispergierter) Initiator ist z.B. Irgacure 819 DW (Ciba). Als ein mithilfe von weiteren wasserkompatiblen Lösungsmitteln löslicher Initiator sei beispielhaft Lucirin TPO (BASF) genannt.

Im Falle der mit Wasser mischbaren Lösungsmittel muss bei der Verarbeitung gegebenenfalls ein erhöhter VOC-Anteil in Kauf genommen werden, da in der fertigen Dispersion ein Lösungsmittelanteil vorhanden sein sollte, der das Ausfallen der eingesetzten Photoinitiatoren verhindert. Ist dies nicht möglich, müssen Rheologieadditive (Antiabsetzadditive) eingesetzt werden.

Auf diese Weise kann verhindert werden, dass die Dispersion vor jeder Anwendung neu aufgerührt werden muss.

Gemäß einer weiteren bevorzugten Ausführungsform der vorliegenden Erfindung liegt die bei Raumtemperatur im Wesentlichen tackfreie Beschichtung als kationisch strahlenhärtendes Harz vor. Besonders gut geeignet sind epoxidmodifizierte Vinyl-Copolymere. Als Beispiel solcher epoxidmodifizierten Vinyl-Copolymere ist UCAR VERR-40 (The Dow Chemical Company) zu nennen.

Die in der tackfreien Beschichtung enthaltene strahlenvernetzbare Komponente kann bevorzugt durch kurzwellige Strahlung, wie ultraviolette Strahlung oder kurzwellige sichtbare Strahlung, oder durch Elektronenstrahlung vernetzt werden. Besonders bevorzugt können als Strahlenquelle Standard-UV-Strahler (dotiert oder undotiert) oder UV-Leuchtdioden eingesetzt werden.

Die das kationisch strahlenhärtende Harz umfassende tackfreie Beschichtung enthält bevorzugt einen für kationische Strahlenhärtung geeigneten Photoinitator. Mit dessen Hilfe kann die Vernetzung auf besonders einfache Weise gestartet werden. Optional kann das kationisch strahlenhärtende Harz auch mit weiteren Harzen kombiniert werden. Die das kationisch härtende Harz umfassende Beschichtung kann ferner auch nur rein thermisch vernetzt werden. In diesem Fall kann von der Verwendung eines Photoinitiators abgesehen werden.

Bevorzugt umfasst das Sicherheitselement neben der bei Raumtemperatur im Wesentlichen tackfreien Beschichtung wenigstens eine weitere Schicht, wobei es sich um eine mittels Strahlung zumindest vorvernetzte Schicht handelt. Diese Schicht wird bevorzugt zwischen dem Substrat und der bei Raumtemperatur im Wesentlichen tackfreien Beschichtung aufgebracht. Mittels Strahlung kann diese Schicht soweit vernetzt werden, dass ein mit der Gefahr des Haftungsverlusts durch Entnetzen verbundenes späteres Aufschmelzen ausgeschlossen wird, trotzdem aber noch eine gute Überdruckbarkeit gegeben ist. Zur Herstellung eines erfindungsgemäßen Sicherheitselements wird die zusätzliche, mittels Strahlung zumindest vorvernetzte Schicht mit der erfindungsgemäßen Beschichtung, insbesondere mit einer UV-härtbaren Dispersion, überschichtet. Diese weitere Schicht wird dann lediglich physikalisch getrocknet, um Tackfreiheit zu erzielen und gleichzeitig die Schmelzbarkeit zu erhalten.

Zur Erhöhung der Fälschungssicherheit umfasst das Sicherheitselement bevorzugt außerdem zusätzlich wenigstens ein visuell und/ oder maschinell prüfbares Sicherheitsmerkmal.

Gemäß einer bevorzugten Ausgestaltung kann das visuell und/oder maschinell prüfbare Sicherheitsmerkmal einen optisch variablen Effekt, insbesondere ein Beugungsmuster, ein Hologramm, einen Farbkippeffekt oder andere Interferenzeffekte umfassen. Nach einer anderen bevorzugten Ausgestaltung ist das Sicherheitselement mit einem Druckbild, insbesondere mit Positiv- oder Negativmustern oder Positiv- oder Negativzeichen als Sicherheitsmerkmal versehen. Das Sicherheitselement kann als weiteres Sicherheitsmerkmal auch Fluoreszenzstoffe, Phosphoreszenzstoffe und/oder magnetische Stoffe enthalten, die insbesondere im Substrat vorliegen können. Es liegt auf der Hand, dass auch Kombinationen solcher Sicherheitsmerkmale möglich sind.

Bevorzugt wird als Substrat des erfindungsgemäßen Sicherheitselements eine transparente Kunststofffolie verwendet. Solche Folien haben den Vorteil, dass die Bestrahlung mit UV-Licht durch die Folie hindurch vorgenommen werden kann. So ist beispielsweise eine PET-Folie ausgehend vom sichtbaren Bereich im UV-Bereich bis ca. 310 nm transparent. Zur Bestrahlung können daher handelsübliche UV-Strahler einsetzt werden. Alternativ kann das Substrat aber auch, gegebenenfalls zusätzlich, eine Papierschicht umfassen.

Besonders bevorzugt umfasst das Sicherheitselement neben dem Substrat und der bei Raumtemperatur im Wesentlichen tackfreien Beschichtung wenigstens eine weitere Schicht, wobei es sich um eine zumindest bereichsweise reflektierende Schicht handelt.

Ebenfalls bevorzugt sind Ausführungsformen, bei denen das Sicherheitselement neben dem Substrat und der bei Raumtemperatur im Wesentlichen tackfreien Beschichtung wenigstens eine weitere Schicht umfasst, wobei es sich um eine Schicht handelt, in die eine Beugungsstruktur in Form eines Reliefs eingeprägt ist. Die Beugungsstruktur ist vorzugsweise wenigstens bereichsweise mit einer reflektierenden Schicht versehen.

Die bei Raumtemperatur im Wesentlichen tackfreie Beschichtung kann auch als Prägelack eingesetzt werden. Übliche thermoplastische Prägelacke erfordern entweder bei der Prägung hohe Temperaturen und Drucke oder werden bei der Applikation des Hologramms auf ein Substrat trüb bzw. matt, da die geprägten Strukturen unter Applikationsbedingungen erweichen und verdrückt werden. Bei üblichen, in der Regel flüssigen UV-Lacksystemen wiederum ist nur eine durchgehende Härtung der Prägeschicht möglich, wodurch ein kantenscharfes Herausbrechen bei der Herstellung eines Patches nicht oder nur bedingt möglich ist.

Wird ein erfindungsgemäßes Sicherheitselement mit einer bei Raumtemperatur im Wesentlichen tackfreien Beschichtung auf einem Substrat, insbesondere einer Kunststofffolie, verwendet, die gegebenenfalls mit einer Trennschicht (z.B. Wachse) versehen ist, liegt zunächst ein niedrigschmelzender thermoplastischer Prägelack vor. In diese Lackschicht kann ein Motiv, insbesondere eine Beugungsstruktur in Form eines Reliefs geprägt werden. Währenddessen oder danach (bei blockfreier Einstellung und entsprechendem Glaspunkt der Dispersion auch nach Wickeln möglich) erfolgt die Härtung der Dispersion durch Maskenbelichtung. Das heißt, die später zu übertragenden Bereiche (Patches) werden belichtet, die Zwischenbereiche nicht. Die Zwischenbereiche bleiben daher weich und schmelzbar, wodurch später ein kantenscharfes Herausschmelzen möglich wird, während die belichteten Bereiche auch beim Transferprozess hart bleiben und ihre Prägestrukturen behalten. Die bei Raumtemperatur im Wesentlichen tackfreien Beschichtungen gemäß der vorliegenden Erfindung können also während des Prägeprozesses vernetzt werden und sind daher auch bei hohen Drucken und Temperaturen dimensionsstabil und brillant.

Gemäß einer bevorzugten Ausführungsform der vorliegenden Erfindung umfasst das Sicherheitselement daher neben dem Substrat eine bei Raumtemperatur im Wesentlichen tackfreie Beschichtung, wobei in die bei Raumtemperatur im Wesentlichen tackfreie Beschichtung eine Beugungsstruktur in Form eines Reliefs eingeprägt ist. Vorteilhafterweise liegt die bei Raumtemperatur im Wesentlichen tackfreie Beschichtung dabei in einer bereichsweise gehärteten Form vor. Die bei Raumtemperatur im Wesentlichen tackfreie Beschichtung ist bevorzugt nur in den gehärteten Bereichen mit der Beugungsstruktur versehen.

Vorteilhafterweise sind wenigstens die mit der Beugungsstruktur versehenen Bereiche der gehärteten Schicht wenigstens bereichsweise mit einer reflektierenden Schicht ausgestattet. Die reflektierende Schicht liegt dabei bevorzugt in Form von Positiv- oder Negativmustern vor.

Sicherheitselemente, die auf einer separaten Schicht, beispielsweise einer Kunststofffolie, in der umgekehrten Reihenfolge, wie sie später auf dem Sicherheitspapier zu liegen kommt, vorbereitet werden und anschließend mittels einer Klebstoff- oder Lackschicht in den gewünschten Umrissformen auf das Sicherheitspapier übertragen werden, werden als Transferelemente bezeichnet. Die separate Schicht kann dabei nach dem Übertrag von dem Schichtaufbau des Sicherheitselements abgezogen werden. Um das Ablösen der separaten Schicht nach dem Transfer des Sicherheitselements zu erleichtern, kann zwischen dieser Schicht und dem abzulösenden Teil des Sicherheitselements eine Trennschicht vorgesehen sein.

Gemäß einer weiteren bevorzugten Ausführungsform umfasst das Sicherheitselement daher neben dem Substrat und der bei Raumtemperatur im Wesentlichen tackfreien Beschichtung wenigstens eine weitere Schicht, wobei es sich um eine Trennschicht handelt. Besonders bevorzugt ist es, wenn die Trennschicht zwischen dem Substrat und der bei Raumtemperatur im Wesentlichen tackfreien Beschichtung angeordnet ist.

Die bei Raumtemperatur im Wesentlichen tackfreie Beschichtung des Sicherheitselements liegt gemäß einer weiteren bevorzugten Ausführungsform mit Druckfarbe bedruckt und mittels Strahlung vernetzt vor. Insbesondere Beschichtungen von Papier sollten Schmutz abweisend sein, eine gute Druckfarbenhaftung bieten und bei Beständigkeitstests nicht als Trennstelle zwischen Papier und Druckfarbe fungieren. Durch Anwendung einer definierten Temperatur, bei der die Vernetzungsreaktion der bei Raumtemperatur im Wesentlichen tackfreien Beschichtung erfolgt, kann der Vernetzungsgrad gesteuert werden und damit die Balance zwischen Druckfarbenhaftung und Schmutzabweisung eingestellt werden.

Das Bedrucken kann alternativ entweder nach der vollständigen Vernetzung der tackfreien Beschichtung erfolgen oder vor der Vernetzung. Erfolgt das Bedrucken vor der Vernetzung, so wird die bei Raumtemperatur im Wesentlichen tackfreie Beschichtung bedruckt, wobei es zu einer Art Anlösen der Beschichtung durch die Druckfarbe kommt. Die Druckfarbe verbindet sich mit der Beschichtung, wodurch die Haftung weiter verbessert wird. Um Probleme durch Wegschlagen bzw. ein zu starkes Aufsaugen der Beschichtung durch das Papier beim Auftragen zu vermeiden, können Rheologieadditive (speziell Verdicker) eingesetzt werden.

In einer ebenfalls vorteilhaften Variante wird die tackfreie Beschichtung vor dem Bedrucken mit Druckfarbe vorvernetzt. Eine vollständige Vernetzung erfolgt jedoch auch hier erst nach dem Bedrucken.

In bevorzugten Ausgestaltungen ist das Sicherheitselement in Form eines Sicherheitsbandes, eines Sicherheitsstreifens, eines Patches oder eines sonstigen flächigen Sicherheitselements ausgebildet.

Das Substrat des Sicherheitselements kann auch in Form von Fasern vorliegen, wobei die Fasern von der bei Raumtemperatur im Wesentlichen tackfreien Beschichtung umgeben sind.

Besondere Vorteile ergeben sich, wenn das Sicherheitselement über einem in einem Sicherheitspapier oder einem Wertgegenstand vorliegenden Fenster angeordnet ist. Dieses Fenster ist bevorzugt papiermacherisch hergestellt oder ausgestanzt.

Die vorliegende Erfindung umfasst auch ein Sicherheitspapier für die Herstellung von Sicherheits- oder Wertdokumenten, wie Banknoten, Schecks, Ausweiskarten, Urkunden oder dergleichen, das mit einem oben beschriebenen Sicherheitselement ausgestattet ist. Vorteilhafterweise weist das Sicherheitspapier neben dem erfindungsgemäßen Sicherheitselement wenigstens ein zusätzliches Trägersubstrat auf. Als Trägersubstrat wird Papier bevorzugt. Ebenso ist von der vorliegenden Erfindung ein Wertgegenstand, Markenartikel, Wertdokument oder dergleichen mit einem derartigen Sicherheitselement umfasst.

Bevorzugt kann das Sicherheitselement dabei auf dem Sicherheitspapier oder Wertdokument angebracht oder in dieses eingebettet sein. Alternativ ist das Sicherheitselement nach Art eines Fenstersicherheitsfadens in das Sicherheitspapier oder Wertdokument eingebettet und ist in Fensterbereichen des Sicherheitspapiers oder Wertdokuments an dessen Oberfläche sichtbar. Das Sicherheitselement kann auch einen Pendelsicherheitsfaden bilden, der abwechselnd an gegenüberliegenden Oberflächen des Sicherheitspapiers oder Wertdokuments erscheint.

Bei dem Verfahren zur Herstellung eines der oben beschriebenen Sicherheitselemente wird eine bei Raumtemperatur im Wesentlichen tackfreie Beschichtung auf ein Substrat zumindest teilweise aufgebracht. Die bei Raumtemperatur im Wesentlichen tackfreie Beschichtung wird danach bevorzugt zumindest physikalisch getrocknet.

Gemäß einer besonders bevorzugten Verfahrensvariante wird die bei Raumtemperatur im Wesentlichen tackfreie Beschichtung als wässrige Dispersion aufgetragen.

Gemäß einer weiteren bevorzugten Verfahrensvariante wird als bei Raumtemperatur im Wesentlichen tackfreie Beschichtung ein kationisch strahlenhärtendes Harz aufgetragen.

In einer bevorzugten Ausgestaltung des Verfahrens wird vor Aufbringung der bei Raumtemperatur im Wesentlichen tackfreien Beschichtung wenigstens eine weitere Schicht auf das Substrat wenigstens bereichsweise aufgebracht. Diese weitere Schicht kann eine mittels Strahlung vernetzbare Schicht sein, die mittels Strahlung zumindest vorvernetzt wird, bevor die tackfreie Beschichtung aufgetragen wird. Durch die Vorvernetzung kann ein mit der Gefahr des Haftungsverlusts zum Substrat verbundenes späteres Aufschmelzen minimiert werden.

Bei einer ebenfalls vorteilhaften Variante wird die bei Raumtemperatur im Wesentlichen tackfreie Beschichtung durch ultraviolette Strahlung oder durch Elektronenstrahlung vernetzt.

Die vorliegende Erfindung umfasst auch ein Verfahren zur Herstellung eines oben beschriebenen Sicherheitspapiers oder Wertgegenstands, wobei das Sicherheitspapier oder der Wertgegenstand mit einem oben beschriebenen Sicherheitselement ausgestattet wird.

Gemäß einer bevorzugten Verfahrensvariante wird dabei das Sicherheitselement bei erhöhtem Druck und erhöhter Temperatur auf ein Trägersubstrat aufgebracht und anschließend die bei Raumtemperatur im Wesentlichen tackfreie Beschichtung mittels Strahlung zumindest vorvernetzt. Liegt das Sicherheitselement als Transferelement vor, kann die bei Raumtemperatur im Wesentlichen tackfreie Beschichtung nach dem Entfernen des Substrats und, falls vorhanden, der Trennschicht vollständig vernetzt werden. Gemäß einer weiteren bevorzugten Verfahrensvariante wird die bei Raumtemperatur im Wesentlichen tackfreie Beschichtung unmittelbar vor Aufbringung des Sicherheitselements auf das Sicherheitspapier oder den Wertgegenstand aus Richtung der Beschichtung mit kurzwelliger Strahlung, insbesondere kurzwelliger sichtbarer Strahlung oder UV-Strahlung, bestrahlt und anschließend bei erhöhtem Druck und erhöhter Temperatur auf ein Trägersubstrat aufgebracht. Die Belichtung von der Beschichtungsseite her ist vorteilhaft, da eine Belastung des Trägersubstrats durch UV-Strahlung sowie eine UV-Belastung des Materials des Sicherheitselements vermieden oder zumindest signifikant verringert wird.

Die vorliegende Erfindung kann daneben die Verwendung eines der oben beschriebenen Sicherheitselemente zur Herstellung von Folienverbund-Banknoten sowie die Verwendung als Verpackungsmaterial umfassen. Beispielsweise sind sterilisierbare Folienverpackungen mit einem erfindungsgemäßen Sicherheitselement siegel- und vernetzbar. Bei erfolgreicher UV-Sterilisation wird gleichzeitig die Siegelnaht vernetzt und fest.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen
- Fig. 1: im Querschnitt eine schematische Darstellung eines erfindungsgemäßen Sicherheitselements mit einer bei Raumtemperatur im Wesentlichen tackfreien Beschichtung;
- Fig. 2: im Querschnitt eine schematische Darstellung eines Sicherheitspapiers, das mit dem Sicherheitselement von Fig. 1 ausgestattet ist;
- Fig. 3: eine schematische Darstellung eines Sicherheitselements nach einem anderen Ausführungsbeispiel der Erfindung im Querschnitt;
- Fig. 4: im Querschnitt eine schematische Darstellung eines Sicherheitspapiers, das mit dem Sicherheitselement von Fig. 3 ausgestattet ist;
- Fig. 5: eine schematische Darstellung eines Sicherheitspapiers nach einem anderen Ausführungsbeispiel der Erfindung im Querschnitt;
- Fig. 6: im Querschnitt eine schematische Darstellung des Sicherheitspapiers von Fig. 5 nach dem Ablösen des Substrats des als Transferelement ausgebildeten Sicherheitselements;
- Fig. 7: eine schematische Darstellung eines Sicherheitselements bzw. eines Sicherheitspapiers nach einem anderen Ausführungsbeispiel der Erfindung im Querschnitt;
- Fig. 8: eine schematische Darstellung eines Sicherheitselements bzw. eines Sicherheitspapiers nach einem anderen Ausführungsbeispiel der Erfindung im Querschnitt;
- Fig. 9: eine schematische Darstellung eines als Transferelement ausgebildeten Sicherheitselements nach einem anderen Ausführungsbeispiel der Erfindung im Querschnitt;
- Fig. 10: eine schematische Darstellung des Sicherheitselements von Fig. 9 nach Belichtung mit UV-Strahlung im Querschnitt;
- Fig. 11: eine schematische Darstellung eines Sicherheitspapiers nach einem anderen Ausführungsbeispiel der Erfindung im Querschnitt;
- Fig. 12: eine schematische Darstellung eines Wertdokuments in Aufsicht;
- Fig. 13: einen Querschnitt durch das Wertdokument von Fig. 12.

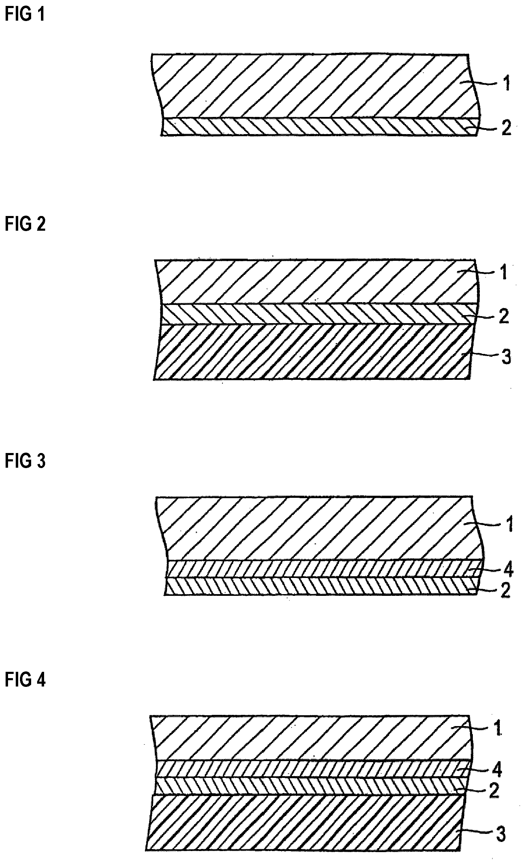

Fig. 1 zeigt eine schematische Darstellung eines erfindungsgemäßen Sicherheitselements mit einem Substrat 1 und einer bei Raumtemperatur im Wesentlichen tackfreien Beschichtung 2. Zur Herstellung des Sicherheitselements wird beispielsweise eine mittels UV-Strahlung härtbare Dispersion (UV-Dispersion) auf das Substrat 1, zum Beispiel auf eine Kunststofffolie, insbesondere eine PET- oder OPP-Folie, aufgetragen. Die UV-Dispersion wird getrocknet (z.B. bei 80°C), wodurch eine bei Raumtemperatur im Wesentlichen tackfreie Beschichtung 2 entsteht.

Das Sicherheitselement sowie sämtliche nachfolgend beschriebenen Sicherheitselemente können mit weiteren, in den jeweiligen Figuren nicht dargestellten Sicherheitsmerkmalen, beispielsweise einem Hologramm oder einem Druckdesign, ausgestattet sein.

Fig. 2 zeigt im Querschnitt eine schematische Darstellung eines Sicherheitspapiers, das mit dem Sicherheitselement von Fig. 1 ausgestattet ist. Zur Herstellung des Sicherheitspapiers wird das Sicherheitselement von Fig. 1 durch einen Heißsiegelvorgang bei erhöhtem Druck und erhöhter Temperatur (z.B. bei 140°C) auf ein Trägersubstrat 3, z.B. Papier, übertragen. Die bei Raumtemperatur im Wesentlichen tackfreie Beschichtung übernimmt in diesem Fall also die Funktion eines Heißsiegellacks.

Anschließend wird die Beschichtung 2 von Fig. 1 durch Einwirkung von UV-Strahlung (z.B. Hg- und Fe-Strahler) vernetzt, sodass schließlich ein Sicherheitspapier mit einer strahlenvernetzten, unschmelzbaren Beschichtung 2 und einem abdeckenden Substrat 1, z.B. einer Kunststofffolie, erhalten wird.

Fig. 3 zeigt im Querschnitt eine schematische Darstellung eines Sicherheitselements nach einem anderen Ausführungsbeispiel der Erfindung. Zur Herstellung des Sicherheitselements wird eine UV-Dispersion auf ein Substrat 1, zum Beispiel auf eine Kunststofffolie, aufgetragen. Bei der Kunststofffolie handelt es sich beispielsweise um eine PET- oder OPP-Folie. Die UV-Dispersion wird getrocknet (z.B. bei 80°C) und durch Einwirkung von UV-Strahlung vernetzt, wodurch eine unschmelzbare Beschichtung 4 entsteht. Über dieser Beschichtung 4 wird eine weitere Beschichtung mit einer UV-Dispersion aufgetragen und getrocknet (z.B. bei 80°C), wodurch eine bei Raumtemperatur im Wesentlichen tackfreie Beschichtung 2 entsteht. Die Ausbildung einer solchen zweilagigen Beschichtung hat den Vorteil, dass eine gute Haftung zum Substrat 1 beim anschließenden Heißsiegelvorgang gewährleistet ist.

Fig. 4 zeigt im Querschnitt eine schematische Darstellung eines Sicherheitspapiers, das mit dem Sicherheitselement von Fig. 3 ausgestattet ist. Zur Herstellung des Sicherheitspapiers wird das Sicherheitselement von Fig. 3 durch einen Heißsiegelvorgang bei erhöhtem Druck und erhöhter Temperatur (z.B. bei 140°C) auf ein Trägersubstrat 3 aus Papier aufgetragen. Anschließend wird die Beschichtung 2 von Fig. 3 durch Einwirkung von UV-Strahlung (z.B. Hg- und Fe-Strahler) vernetzt, sodass schließlich ein Sicherheitspapier mit einer zweilagigen, strahlenvernetzten, unschmelzbaren Beschichtung 2, 4 und einem abdeckenden Substrat 1, hier einer Kunststofffolie, erhalten wird.

Die beschriebenen Sicherheitselemente zeichnen sich durch eine hervorragende Haftung der Beschichtungen 2, 4 an dem Substrat 1 aus. Diese Haftung geht selbst bei den erhöhten Temperaturen des Heißsiegelvorgangs nicht verloren. Sollten dennoch Haftungsprobleme bei einer der verwendeten Kunststofffolien auftreten, so kann z.B. eine druckvorbehandelte Folie (z.B. Hostaphan RNK2600, Mitsubishi Polyester Film) eingesetzt werden.

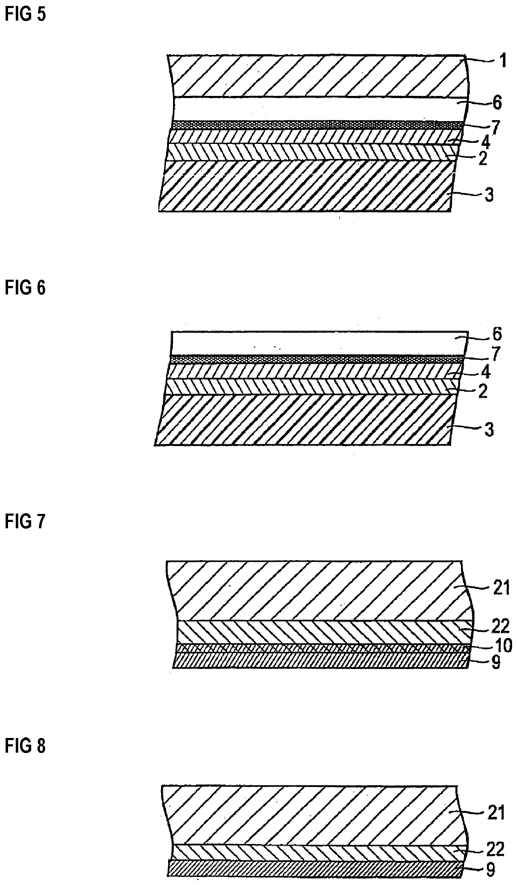

Fig. 5 zeigt im Querschnitt eine schematische Darstellung eines Sicherheitspapiers nach einem anderen Ausführungsbeispiel der Erfindung. Zur Herstellung des hier als Transferelement ausgebildeten Sicherheitselements, mit dem das in Fig. 5 gezeigte Sicherheitspapier ausgerüstet wird, wird auf ein Substrat 1, zum Beispiel auf eine PET-Trägerfolie, ein Prägelack 6 aufgetragen. Optional kann zwischen der PET-Trägerfolie und der Prägelackschicht 6 eine Trennschicht, z.B. aus Wachs, aufgebracht werden. Der Prägelack 6 wird mit einer reflektierenden Schicht 7, beispielsweise einer Metallschicht-oder einer hochbrechenden Schicht, versehen. Als reflektierende Materialien kommen alle Metalle und viele Metalllegierungen in Betracht. Beispiele für geeignete hochbrechende Materialien sind CaS, CrO₂, ZnS, TiO₂ oder SiOₓ. Die reflektierende Schicht 7 kann auch in Form von Mustern oder Zeichen, insbesondere Positiv- oder Negativmustern, aufgebracht werden. Die Prägung des Prägelacks 6, beispielsweise eine Beugungsstruktur in Form eines Reliefs, die hier aus Gründen der Übersichtlichkeit nicht gezeigt ist und auf der dem Substrat 1 abgewandten Seites des Prägelacks 6 vorliegt, kann vor oder nach dem Aufbringen der reflektierenden Schicht 7 erfolgen.

Über der reflektierenden Schicht 7 wird eine UV-Dispersion aufgetragen und thermisch getrocknet (z.B. bei 80°C), wodurch eine bei Raumtemperatur im Wesentlichen tackfreie Beschichtung 4 entsteht. Die bei Raumtemperatur im Wesentlichen tackfreie Beschichtung kann in diesem Fall also als Schutzlack für die Metallisierung dienen. Bei Bedarf kann ferner zwischen der reflektierenden Schicht 7 und der Beschichtung 4 eine Primer-/Haftvermittler-Schicht aufgetragen werden.

Durch eine UV-Bestrahlung aus Richtung der Beschichtung, d.h. von der im Wesentlichen für UV-Strahlung durchlässigen Seite des Sicherheitspapiers her, wird die UV-Dispersion vernetzt, wodurch eine unschmelzbare Beschichtung 4 entsteht. Auf diese vernetzte UV-Dispersionsschicht wird anschließend eine weitere Beschichtung mit einer UV-härtbaren Dispersion aufgebracht und thermisch getrocknet (z.B. bei 80°C). Durch die Trocknung der UV-Dispersion entsteht eine bei Raumtemperatur im Wesentlichen tackfreie Beschichtung 2.

Dieses Sicherheitselement wird zur Herstellung des dargestellten Sicherheitspapiers anschließend durch einen Heißsiegelvorgang bei erhöhtem Druck und erhöhter Temperatur (z.B. bei 140°C) auf ein Trägersubstrat 3 aus Papier aufgetragen. Anschließend kann die Beschichtung 2 durch Einwirkung von UV-Strahlung (z.B. Hg- und Fe-Strahler) durch die PET-Trägerfolie hindurch vorvernetzt werden, wobei die Vorvernetzung aber nicht zwingend erforderlich ist.

Anschließend wird die PET-Trägerfolie und, falls vorhanden, die Trennschicht abgezogen. Die PET-Trägerfolie kann aber auch auf der Prägelackschicht 6 als Schutzschicht verbleiben. In diesem Fall ist keine Trennschicht vorgesehen. Schließlich wird die vorvernetzte Beschichtung 2 durch Einwirkung von UV-Strahlung (z.B. Hg-undotierter-Strahler) durch die reflektierende Schicht 7 hindurch vernetzt, so dass schließlich das in Fig. 6 im Querschnitt schematisch gezeigte Sicherheitspapier mit einem Trägersubstrat 3 aus Papier, einer zweilagigen, strahlenvernetzten, unschmelzbaren Beschichtung 2, 4, einer reflektierenden Schicht 7 und einer Prägelackschicht 6 erhalten wird.

Die Vernetzung mithilfe von UV-Strahlung durch eine Metallschicht hindurch stellt kein technisches Problem dar, da Metallisierungen (speziell Aluminium) eine relativ hohe Transparenz, insbesondere im UV-Bereich, aufweisen. Eine Metallisierung mit Aluminium (Optische Dichte = 2,0) ist beispielsweise für Strahlung im langwelligen UV-Bereich zu 5 % bis 10 % transparent. Zudem bewirkt die Prägelackschicht 6 im Zusammenhang mit der Metallschicht einen sehr guten Sauerstoffausschluss, was zu einer verbesserten UV-Vernetzung der Beschichtungen 2, 4 führt.

Fig. 7 zeigt im Querschnitt eine schematische Darstellung eines Sicherheitselements bzw. eines Sicherheitspapiers nach einem anderen Ausführungsbeispiel der Erfindung. Zur Herstellung des Sicherheitselements bzw. -papiers wird eine UV-Dispersion auf ein Substrat 21 aus Papier vollflächig aufgetragen. Die UV-Dispersion kann auch beidseitig auf das Substrat 21 aufgebracht werden, so dass das Substrat 21 von der Beschichtung 22 vollständig umschlossen ist, was hier aus Gründen der Übersichtlichkeit nicht dargestellt ist. Bei Bedarf kann die UV-Dispersion außerdem Rheologieadditive enthalten. Die UV-Dispersion wird getrocknet (z.B. bei 80°C), wodurch eine bei Raumtemperatur im Wesentlichen tackfreie Beschichtung 22 entsteht. Anschließend wird die im Wesentlichen tackfreie Beschichtung 22 mit einer Druckfarbe 9 bedruckt.

Dadurch wird die UV-härtbare Beschichtung 22 im oberen, dem PapierSubstrat abgewandten Bereich 10 "angelöst", d.h. die Druckfarbe verbindet sich mit der Beschichtung 22. Dann wird die Beschichtung 22 durch Einwirkung von UV-Strahlung (z.B. Hg- und Fe-Strahler) vernetzt, so dass ein erfindungsgemäßes Sicherheitselement- bzw. papier mit einer Papierschicht, einer nunmehr strahlenvernetzten, unschmelzbaren Beschichtung 22, die mit der Druckfarbe 9 bedruckt ist, erhalten wird.

Alternativ wird zur Herstellung des in Fig. 8 im Querschnitt schematisch dargestellten Sicherheitselements bzw. -papiers nach einem anderen Ausführungsbeispiel der Erfindung eine UV-Dispersion auf ein Substrat 21 aus Papier vollflächig aufgetragen. Auch hier kann die UV-Dispersion beidseitig auf das Substrat 21 aufgebracht werden. Die UV-Dispersion wird getrocknet (z.B. bei 80°C), wodurch eine bei Raumtemperatur im Wesentlichen tackfreie Beschichtung 22 entsteht. Anschließend wird die Beschichtung 22 durch Einwirkung von UV-Strahlung (z.B. Hg- und Fe-Strahler) vernetzt, so dass ein erfindungsgemäßes Sicherheitselement bzw. -papier mit einer strahlenvernetzten, unschmelzbaren Beschichtung 22 erhalten wird. Die strahlenvernetzte Beschichtung 22 kann anschließend mit Druckfarbe 9 bedruckt werden, wobei die Druckfarbenhaftung und die Schmutz abweisenden Eigenschaften über den Vernetzungsgrad der Beschichtung 22 angepasst werden können.

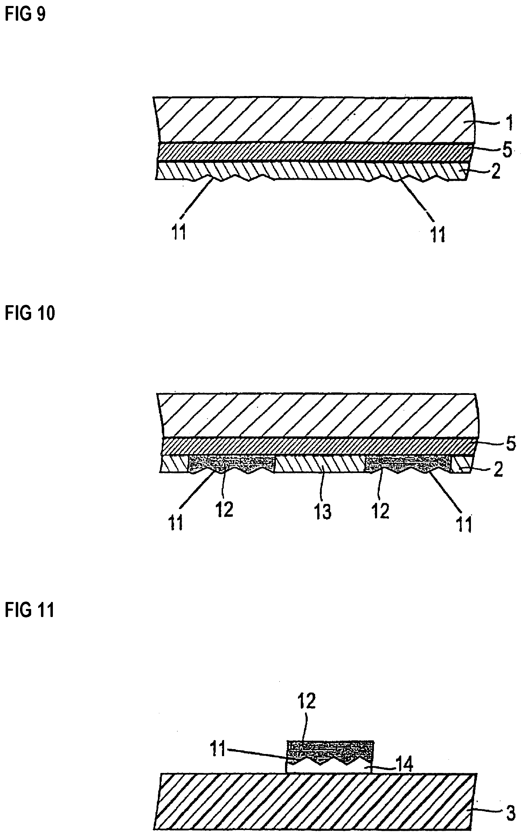

Fig. 9 zeigt im Querschnitt eine schematische Darstellung eines als Transferelement ausgebildeten Sicherheitselements nach einem anderen Ausführungsbeispiel der Erfindung. Zur Herstellung des Sicherheitselements wird eine Beschichtung mit einer UV-Dispersion auf ein Substrat 1, zum Beispiel auf eine PET-Trägerfolie, aufgetragen. Die UV-Dispersion wird thermisch getrocknet (z.B. bei 80°C), wodurch eine bei Raumtemperatur im Wesentlichen tackfreie Beschichtung 2 entsteht. Optional kann zwischen der PET-Trägerfolie und der Beschichtung 2 eine Trennschicht 5 aufgebracht werden.

In die Beschichtung 2 kann eine Beugungsstruktur 11 eingeprägt werden. Die UV-härtbare Dispersion wird in diesem Fall also als Prägelack eingesetzt. Während dieses Vorgangs oder anschließend erfolgt die Härtung der Beschichtung 2 durch Einwirkung von UV-Strahlung. Die Belichtung wird durch eine Maske hindurch vorgenommen. Wie aus der Fig. 10 zu ersehen ist, wird die UV-Belichtung nur an den Stellen 12 vorgenommen, an denen zuvor ein Motiv in Form einer Beugungsstruktur 11 eingeprägt wurde. Es werden auf diese Weise die in einem nachfolgenden Schritt zu übertragenden Patches belichtet, die dazwischen liegenden Bereiche aber nicht. Die Zwischenbereiche 13 bleiben daher weich und schmelzbar, wodurch ein kantenscharfes Herausschmelzen beim Übertragen des Sicherheitselements auf ein Trägersubstrat möglich wird. Die belichteten Bereiche 12 hingegen bleiben auch beim Transferprozess hart und ihre Prägestrukturen bleiben erhalten. Optional kann die Beschichtung 2 einschließlich der Beugungsstrukturen 11 oder auch nur die mit einer Beugungsstruktur versehenen Bereiche mit einer Metallschicht oder einer hochbrechenden Schicht versehen werden, die hier aus Gründen der Übersichtlichkeit nicht dargestellt ist. Die Metallschicht bzw. hochbrechende Schicht kann ferner in Form von Mustern oder Zeichen, insbesondere Positiv- oder Negativmustern, aufgebracht werden.

Fig. 11 zeigt im Querschnitt eine schematische Darstellung eines Sicherheitspapiers, das mit dem Sicherheitselement von Fig. 10 ausgestattet ist. Nach der in Fig. 10 dargestellten, durch UV-Belichtung bewirkten Vernetzung der Beschichtung 2 an den Stellen 12 der Beschichtung 2, an denen zuvor ein Motiv in Form einer Beugungsstruktur 11 eingeprägt wurde, sowie gegebenenfalls der Aufbringung einer Metallschicht bzw. einer hochbrechenden Schicht, wird der Patch mittels eines Heißsiegelklebstoffs 14 auf ein Trägersubstrat 3 appliziert. Durch die auf die Stellen 12 begrenzte UV-Belichtung bleiben die Zwischenbereiche 13 weich und schmelzbar, wodurch beim Transfer des Sicherheitselements durch einen heißen Stempel ein kantenscharfes Herausschmelzen möglich wird. Die belichteten Bereiche 12 hingegen bleiben auch beim Transferprozess hart und ihre Prägestrukturen bleiben erhalten.

Es ist aber auch möglich, anstelle des Heißsiegelklebstoffs eine Beschichtung aus UV-vernetzbarer Dispersion zu verwenden. Dabei ist allerdings zu beachten, dass die UV-vernetzbare Dispersion erst nach Entfernen der nicht gehärteten Zwischenbereiche 13 transferiert und mittels UV-Strahlung vernetzt wird.

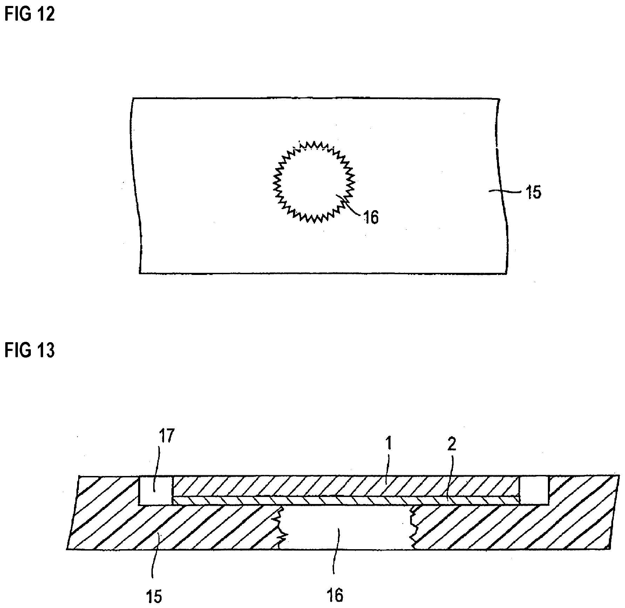

Fig. 12 zeigt in Aufsicht ein Wertdokument 15, beispielsweise eine Banknote, das mit einer durchgehenden Öffnung 16 ausgestattet ist. Die Öffnung 16 ist bevorzugt papiermacherisch hergestellt oder ausgestanzt. Die maschinelle Herstellung solcher Fensteröffnungen 16 ist in der DE 101 63 381 A1 beschrieben.

Fig. 13 zeigt einen Querschnitt des in Fig. 12 dargestellten Wertdokuments 15 mit dem Unterschied, dass die Öffnung 16 durch ein erfindungsgemäßes Sicherheitselement verschlossen ist. Das Sicherheitselement weist ein Substrat 1 und eine bei Raumtemperatur im Wesentlichen tackfreie Beschichtung 2 auf.

Das Sicherheitselement ist vorzugsweise in einer Vertiefung 17 angeordnet, die die Öffnung 16 umgibt. Die Vertiefung 17 kann durch nachträgliches Kalandrieren der Papierbahn erzeugt werden, d. h. durch Komprimierung der Papierfasern. Alternativ kann die Vertiefung 17 auch durch eine tatsächliche Verringerung der Papierdicke in diesem Bereich erzeugt werden. Dies geschieht am einfachsten direkt während der Herstellung der Papierbahn, indem die Blattbildung in diesem Bereich durch entsprechende Ausbildung des Siebs dünner ausgeführt wird.

In einem weiteren, nicht dargestellten Ausführungsbeispiel besteht das Sicherheitselement aus einem Substrat und einer bei Raumtemperatur im Wesentlichen tackfreien Beschichtung. Zur Herstellung des Sicherheitselements wird beispielsweise ein kationisch strahlenhärtendes Harz, insbesondere ein epoxidmodifiziertes Vinyl-Copolymer (z. B. UCAR VERR-40, The Dow Chemical Company), das mit einem für kationische Strahlenhärtung geeigneten Photoinitiator versehen ist, auf das Substrat, zum Beispiel auf eine Kunststofffolie, insbesondere eine PET- oder OPP-Folie, aufgetragen. Das kationisch strahlenhärtende Harz wird getrocknet (z.B. bei 80°C), wodurch eine bei Raumtemperatur im Wesentlichen tackfreie Beschichtung entsteht.

Zur Herstellung eines mit dem vorstehend beschriebenen Sicherheitselement ausgestatteten Sicherheitspapiers wird das Sicherheitselement durch einen Heißsiegelvorgang bei erhöhtem Druck und erhöhter Temperatur (z.B. bei 140°C) auf ein Trägersubstrat, z.B. Papier, übertragen. Dabei wird die thermische Vernetzung bereits gestartet. Anschließend wird die kationisch strahlenhärtbare Beschichtung durch Einwirkung von UV-Strahlung (z.B. Hg-und Fe-Strahler) vernetzt, sodass schließlich ein Sicherheitspapier mit einer strahlenvernetzten, unschmelzbaren Beschichtung und einem abdeckenden Substrat, z.B. einer Kunststofffolie, erhalten wird.

Alternativ kann die Beschichtung auch nur rein thermisch vernetzt werden. Dazu wird das Sicherheitselement nur durch einen Heißsiegelvorgang bei erhöhtem Druck und erhöhter Temperatur (z.B. bei 140°C bis 160°C) auf ein Trägersubstrat, z.B. Papier, übertragen. Die thermische Vernetzung erfolgt dabei im Rahmen des Heißsiegelvorgangs. Es liegt auf der Hand, dass bei dieser Verfahrensvariante von der Verwendung eines Photoinitiators abgesehen werden kann.

Die kationische Strahlenhärtung ist im Gegensatz zur radikalischen Strahlenhärtung ein langsamerer Prozess, der auch nach Bestrahlungsende noch weiterläuft. Während Radikale in kurzer Zeit abgefangen werden, wird bei der kationischen Strahlenhärtung eine Säure freigesetzt, die in der Beschichtung die Vernetzungsreaktion katalysiert. Daher kann die kationisch strahlenhärtbare Beschichtung in einer weiteren Variante des vorstehenden Ausführungsbeispiels unmittelbar vor der Applikation des Sicherheitselements von der Beschichtungsseite her mit kurzwelliger Strahlung (UV- oder kurzwellige blaue Strahlung) belichtet werden. Als Strahlenquelle können entweder übliche UV-Strahler (dotiert oder undotiert) oder bevorzugt UV-Leuchtdioden eingesetzt werden. UV-Leuchtdioden weisen neben positiven sicherheitstechnischen Aspekten auch technische Vorteile auf, da ein geringerer Wärmeeintrag sowie ein geringerer Energieverbrauch anfällt. Die Belichtung von der Beschichtungsseite her ist vorteilhaft, da keine Belastung des Trägersubstrats, z. B. Papier, durch UV-Strahlung sowie eine geringere UV-Belastung des Materials des Sicherheitselements stattfindet. Durch die Belichtung wird die Vernetzungsreaktion gestartet. Zum Zeitpunkt der Applikation auf das Trägersubstrat ist sie aufgrund der kurzen Zeitspanne noch nicht so weit fortgeschritten, dass das Aufschmelzen der Beschichtung erschwert würde. Da die Reaktion aber ohne weitere Maßnahmen von alleine weiterläuft, zeigt das mit dem Sicherheitselement versehene Sicherheitspapier die geforderten Beständigkeiten.

## Patentansprüche

1. Sicherheitselement für Wertdokumente oder dergleichen, aufweisend ein Substrat (1, 21), das mit einem bei Raumtemperatur nicht klebrigen, zur Aufbringung des Sicherheitselements auf ein Wertdokumentsubstrat geeigneten Heißsiegelklebstoff (2, 22) beschichtet ist, wobei der Heißsiegelklebstoff (2, 22) eine strahlenvernetzbare Komponente enthält, **dadurch gekennzeichnet, dass** der Heißsiegelklebstoff einen Reaktivverdünner enthält.

2. Sicherheitselement nach Anspruch 1, wobei der Reaktivverdünner eine niedermolekulare Verbindung mit einer molekularen Molmasse M < 1000g/mol ist und vorzugsweise von TMP(EO)ₓTA und DPHA gewählt ist.

3. Sicherheitselement nach Anspruch 1 oder 2, wobei der Heißsiegelklebstoff (2, 22) zusätzlich einen Weichmacher enthält, der vorzugsweise einen Schmelzpunkt in einem Bereich von 50°C bis 120°C aufweist.

4. Sicherheitselement nach Anspruch 3, wobei der Weichmacher von der Gruppe bestehend aus Triphenylphosphat, Pentaerythritoltetrabenzoat, Cyclohexandimethanoldibenzoat, Sucrosebenzoat und einem Gemisch zweier oder mehrer der vorstehend genannten Elemente gewählt ist.

5. Sicherheitselement nach Anspruch 3 oder 4, wobei der Weichmacher im Heißsiegelklebstoff (2, 22) bezogen auf den Festkörper in einem Gewichtsanteil in einem Bereich von 1% bis 30%, bevorzugt 2% bis 10%, enthalten ist.

6. Sicherheitselement nach einem der Ansprüche 1 bis 5, wobei der bei Raumtemperatur nicht klebrige, zur Aufbringung des Sicherheitselements auf ein Wertdokumentsubstrat geeignete Heißsiegelklebstoff (2, 22) zumindest physikalisch getrocknet vorliegt.

7. Sicherheitselement nach einem der Ansprüche 1 bis 6, wobei das Substrat (1, 21) ein flächiges Substrat (1, 21) mit zwei gegenüberliegenden Hauptflächen ist, wobei zumindest eine Hauptfläche des Substrats (1, 21) zumindest teilweise mit dem bei Raumtemperatur nicht klebrigen, zur Aufbringung des Sicherheitselements auf ein Wertdokumentsubstrat geeigneten Heißsiegelklebstoff (2, 22) ausgestattet ist.

8. Sicherheitselement nach wenigstens einem der Ansprüche 1 bis 7, wobei der bei Raumtemperatur nicht klebrige, zur Aufbringung des Sicherheitselements auf ein Wertdokumentsubstrat geeignete Heißsiegelklebstoff (2, 22) mittels Auftragen einer Lösung, Emulsion oder Dispersion erhältlich ist.

9. Sicherheitselement nach Anspruch 8, wobei der bei Raumtemperatur nicht klebrige, zur Aufbringung des Sicherheitselements auf ein Wertdokumentsubstrat geeignete Heißsiegelklebstoff (2, 22) mittels Auftragen einer wässrigen Dispersion erhältlich ist.

10. Sicherheitselement nach Anspruch 8, wobei der bei Raumtemperatur nicht klebrige, zur Aufbringung des Sicherheitselements auf ein Wertdokumentsubstrat geeignete Heißsiegelklebstoff (2, 22) mittels Auftragen einer auf einem organischen Lösungsmittel basierenden Lösung erhältlich ist, wobei das organische Lösungsmittel vorzugsweise zumindest Butylacetat, Propylacetat oder Ethylacetat aufweist, weiter bevorzugt in einem Gewichtsanteil in einem Bereich von 30% bis 90%, insbesondere bevorzugt 40% bis 75%.

11. Sicherheitselement nach Anspruch 10, wobei der Heißsiegelklebstoff (2, 22) zusätzlich ein Präpolymer aufweist, das bei Raumtemperatur nach physikalischer Trocknung nicht klebrig ist, im Durchschnitt mindestens zwei reaktive Gruppen enthält und ein Molekulargewicht von mindestens 600 g/Mol aufweist, vorzugsweise in einem Gewichtsanteil in einem Bereich von 8% bis 65%.

12. Sicherheitselement nach Anspruch 9, wobei die Dispersion ausgewählt ist aus der Gruppe bestehend aus aliphatischen Polyurethandispersionen, aromatischen Polyurethandispersionen, Acrylaten, anionischen acrylatmodifizierten Polyurethandispersionen, Polyurethan-Polyetheracrylaten und Gemischen zweier oder mehrerer der vorstehend genannten Elemente.

13. Sicherheitselement nach einem der Ansprüche 1 bis 12, wobei der Heißsiegelklebstoff (2, 22) ein kationisch strahlenhärtendes Harz umfasst.

14. Sicherheitselement nach einem der Ansprüche 1 bis 13, wobei die strahlenvernetzbare Komponente durch ultraviolette Strahlung oder Elektronenstrahlung vernetzbar ist.

15. Sicherheitselement nach einem der Ansprüche 1 bis 14, wobei der Heißsiegelklebstoff (2, 22) einen Photoinitiator enthält.

16. Sicherheitselement nach einem der Ansprüche 1 bis 15, wobei das Substrat (1, 21) eine transparente Kunststofffolie ist.

17. Wertdokument, insbesondere eine Banknote, umfassend ein Sicherheitselement nach einem der Ansprüche 1 bis 16.

18. Verfahren zur Herstellung eines Sicherheitselements nach einem der Ansprüche 1 bis 16, umfassend den Schritt des Aufbringens eines bei Raumtemperatur nicht klebrigen, zur Aufbringung des Sicherheitselements auf ein Wertdokumentsubstrat geeigneten Heißsiegelklebstoff (2, 22) auf ein Substrat (1, 21), wobei der Heißsiegelklebstoff (2, 22) eine strahlenvernetzbare Komponente und einen Reaktivverdünner enthält.

19. Verfahren zur Herstellung eines Wertdokuments nach Anspruch 17, umfassend den Schritt des Ausstattens des Wertdokumentsubstrats, insbesondere ein Papiersubstrat, mit dem Sicherheitselement nach einem der Ansprüche 1 bis 16.

20. Verfahren nach Anspruch 19, wobei das Sicherheitselement bei erhöhtem Druck und erhöhter Temperatur auf das Wertdokumentsubstrat (3) aufgebracht und anschließend der bei Raumtemperatur nicht klebrige Heißsiegelklebstoff (2, 22) mittels Strahlung zumindest vorvernetzt wird.

## Claims

1. Security element for documents of value or the like, having a substrate (1, 21) which has been coated with a heat-sealing adhesive (2, 22) that is non-tacky at room temperature and suitable for applying the security element to a substrate of a document of value, wherein the heat-sealing adhesive (2, 22) contains a radiation-crosslinkable component, **characterized in that** the heat-sealing adhesive contains a reactive diluent.

2. Security element according to Claim 1, wherein the reactive diluent is a low molecular weight compound having a molecular molar mass M < 1000 g/mol and preferably is selected from TMP(EO)ₓTA and DPHA.

3. Security element according to Claim 1 or 2, wherein the heat-sealing adhesive (2, 22) additionally contains a plasticizer, which preferably has a melting point in a range from 50°C to 120°C.

4. Security element according to Claim 3, wherein the plasticizer is selected from the group consisting of triphenyl phosphate, pentaerythritol tetrabenzoate, cyclohexanedimethanol dibenzoate, sucrose benzoate, and a mixture of two or more of the aforementioned elements.

5. Security element according to Claim 3 or 4, wherein the plasticizer is present in the heat-sealing adhesive (2, 22) in a proportion by weight in a range from 1% to 30%, preferably 2% to 10%, based on the solids.

6. Security element according to any of Claims 1 to 5, wherein the heat-sealing adhesive (2, 22) that is non-tacky at room temperature and suitable for applying the security element to a substrate of a document of value is present in an at least physically dried state.

7. Security element according to any of Claims 1 to 6, wherein the substrate (1, 21) is a flat substrate (1, 21) having two opposite main surfaces, wherein at least one main surface of the substrate (1, 21) is at least partly provided with the heat-sealing adhesive (2, 22) that is non-tacky at room temperature and suitable for applying the security element to a substrate of a document of value.

8. Security element according to at least one of Claims 1 to 7, wherein the heat-sealing adhesive (2, 22) that is non-tacky at room temperature and suitable for applying the security element to a substrate of a document of value is obtainable by means of application of a solution, emulsion or dispersion.

9. Security element according to Claim 8, wherein the heat-sealing adhesive (2, 22) that is non-tacky at room temperature and suitable for applying the security element to a substrate of a document of value is obtainable by means of application of an aqueous dispersion.

10. Security element according to Claim 8, wherein the heat-sealing adhesive (2, 22) that is non-tacky at room temperature and suitable for applying the security element to a substrate of a document of value is obtainable by means of application of a solution based on an organic solvent, the organic solvent preferably comprising at least butyl acetate, propyl acetate or ethyl acetate, more preferably in a proportion by weight in a range from 30% to 90%, especially preferably 40% to 75%.

11. Security element according to Claim 10, wherein the heat-sealing adhesive (2, 22) additionally comprises a prepolymer that is non-tacky at room temperature after physical drying, contains on average at least two reactive groups and has a molecular weight of at least 600 g/mol, preferably in a proportion by weight in a range from 8% to 65%.

12. Security element according to Claim 9, wherein the dispersion is selected from the group consisting of aliphatic polyurethane dispersions, aromatic polyurethane dispersions, acrylates, anionic acrylate-modified polyurethane dispersions, polyurethane-polyether acrylates, and mixtures of two or more of the aforementioned elements.

13. Security element according to any of Claims 1 to 12, wherein the heat-sealing adhesive (2, 22) comprises a cationically radiation-curing resin.

14. Security element according to any of Claims 1 to 13, wherein the radiation-crosslinkable component is crosslinkable by ultraviolet radiation or electron beam radiation.

15. Security element according to any of Claims 1 to 14, wherein the heat-sealing adhesive (2, 22) contains a photoinitiator.

16. Security element according to any of Claims 1 to 15, wherein the substrate (1, 21) is a transparent plastics film.

17. Document of value, in particular a banknote, comprising a security element according to any of Claims 1 to 16.

18. Method for producing a security element according to any of Claims 1 to 16, comprising the step of applying to a substrate (1, 21) a heat-sealing adhesive (2, 22) that is non-tacky at room temperature and suitable for applying the security element to a substrate of a document of value, wherein the heat-sealing adhesive (2, 22) contains a radiation-crosslinkable component and a reactive diluent.

19. Method for producing a document of value according to Claim 17, comprising the step of equipping the substrate of the document of value, in particular a paper substrate, with the security element according to any of Claims 1 to 16.

20. Method according to Claim 19, wherein the security element is applied to the substrate (3) of the document of value at elevated pressure and elevated temperature and the heat-sealing adhesive (2, 22) that is non-tacky at room temperature is then at least precrosslinked by means of radiation.

## Revendications

1. Élément de sécurité pour documents de valeur ou analogue, comportant un substrat (1, 21), qui est revêtu d'un adhésif thermoscellant (2, 22), qui n'est pas collant à la température ambiante et convient à l'application d'un élément de sécurité sur un substrat de documents de valeur, l'adhésif thermoscellant (2, 22) contenant un composant réticulable par rayonnement, **caractérisé en ce que** l'adhésif thermoscellant contient un diluant réactif.

2. Élément de sécurité selon la revendication 1, dans lequel le diluant réactif est un composé à faible masse moléculaire ayant une masse moléculaire M < 1 000 g/mol et est choisi de préférence parmi TMP(OE)ₓTA et DPHA.

3. Élément de sécurité selon la revendication 1 ou 2, dans lequel l'adhésif thermoscellant (2, 22) contient en outre un plastifiant qui présente de préférence un point de fusion dans la plage de 50 °C à 120 °C.

4. Élément de sécurité selon la revendication 3, dans lequel le plastifiant est choisi dans le groupe consistant en le phosphate de triphényle, le tétrabenzoate de pentaérythritol, le dibenzoate de cyclohexanediméthanol, le benzoate de saccharose et un mélange de deux ou plusieurs des éléments mentionnés ci-dessus.

5. Élément de sécurité selon la revendication 3 ou 4, dans lequel le plastifiant est contenu dans l'adhésif thermoscellant (2, 22) selon une proportion pondérale dans la plage de 1 % à 30 %, de préférence de 2 % à 10 %, exprimée en extrait sec.

6. Élément de sécurité selon l'une des revendications 1 à 5, dans lequel l'adhésif thermoscellant (2, 22) qui n'est pas collant à la température ambiante et convient à une application de l'élément de sécurité sur un substrat de document de valeur, se présente au moins sous forme physiquement séchée.

7. Élément de sécurité selon l'une des revendications 1 à 6, dans lequel le substrat (1, 21) est un substrat plan (1, 21) ayant deux surfaces principales opposées, au moins une surface principale du substrat (1, 21) étant au moins partiellement garnie de l'adhésif thermoscellant (2, 22) qui n'est pas collant à la température ambiante et convient à une application de l'élément de sécurité sur un substrat de document de valeur.

8. Élément de sécurité selon au moins l'une des revendications 1 à 7, dans lequel l'adhésif thermoscellant (2, 22) qui n'est pas collant à la température ambiante et convient à une application de l'élément de sécurité sur un substrat de document de valeur, peut être obtenu par application d'une solution, d'une émulsion ou d'une dispersion.

9. Élément de sécurité selon la revendication 8, dans lequel l'adhésif thermoscellant (2, 22) qui n'est pas collant à la température ambiante et convient à une application de l'élément de sécurité sur un substrat de document de valeur, peut être obtenu par application d'une dispersion aqueuse.

10. Élément de sécurité selon la revendication 8, dans lequel l'adhésif thermoscellant (2, 22), qui n'est pas collant à la température ambiante et convient à une application de l'élément de sécurité sur un substrat de document de valeur, peut être obtenu par application d'une solution à base d'un solvant organique, le solvant organique comprenant de préférence au moins de l'acétate de butyle, de l'acétate de propyle ou de l'acétate d'éthyle, plus particulièrement selon une proportion pondérale dans la plage de 30 % à 90 %, d'une manière particulièrement préférée de 40 % à 75 %.

11. Élément de sécurité selon la revendication 10, dans lequel l'adhésif thermoscellant (2, 22) comprend en outre un prépolymère qui n'est pas collant à la température ambiante après séchage physique, contient en moyenne au moins deux groupes réactifs et présente une masse moléculaire d'au moins 600 g/mol, de préférence selon une proportion pondérale dans la plage de 8 % à 65 %.

12. Élément de sécurité selon la revendication 9, dans lequel la dispersion est choisie dans le groupe consistant en les dispersions de polyuréthane aliphatiques, les dispersions de polyuréthane aromatiques, les acrylates, les dispersions de polyuréthane anioniques à modification acryle, les polyétheracrylates de polyuréthane et les mélanges de deux ou plus des éléments mentionnés ci-dessus.

13. Élément de sécurité selon l'une des revendications 1 à 12, dans lequel l'adhésif thermoscellant (2, 22) comprend une résine durcissable par rayonnement par voie cationique.

14. Élément de sécurité selon l'une des revendications 1 à 13, dans lequel le composant réticulable par rayonnement est réticulable sous l'effet d'un rayonnement ultraviolet ou d'un rayonnement d'électrons.

15. Élément de sécurité selon l'une des revendications 1 à 14, dans lequel l'adhésif thermoscellant (2, 22) contient un photoamorceur.

16. Élément de sécurité selon l'une des revendications 1 à 15, dans lequel le substrat (1, 21) est une feuille plastique transparente.

17. Document de valeur, en particulier billet de banque, comprenant un élément de sécurité selon l'une des revendications 1 à 16.

18. Procédé de fabrication d'un élément de sécurité selon l'une des revendications 1 à 16, comprenant l'étape d'application, sur un substrat (1, 21), d'un adhésif thermoscellant (2, 22) qui n'est pas collant à la température ambiante et convient à une application de l'élément de sécurité sur un substrat de document de valeur, l'adhésif thermoscellant (2, 22) contenant un composant réticulable par rayonnement et un diluant réactif.

19. Procédé de fabrication d'un document de valeur selon la revendication 17, comprenant l'étape de garnissage du substrat de document de valeur, en particulier un substrat de papier, avec l'élément de sécurité selon l'une des revendications 1 à 16.

20. Procédé selon la revendication 19, dans lequel l'élément de sécurité est appliqué sur le substrat de document de valeur (3) sous une pression élevée et une température élevée, puis l'adhésif thermoscellant (2, 22) qui n'est pas collant à la température ambiante est au moins pré-réticulé par rayonnement.
